# EUROPÄISCHE PATENTSCHRIFT

(11) **EP 1 782 703 B1**
(45) Veröffentlichungstag und Bekanntmachung des Hinweises auf die Patenterteilung: **20.01.2016**
(21) Anmeldenummer: 06023046.3
(22) Anmeldetag: 06.11.2006
(51) Int. Cl.: A24C 5/34, G01N 21/952

(54) **Vorrichtung zur optischen Überwachung eines Materialstranges der tabakverarbeitenden Industrie**
Device for optical monitoring of a material strand of the tobacco processing industry
Dispositif destiné à la surveillance optique d'un tronçon de matière dans l'industrie du traitement du tabac

(30) Priorität: 08.11.2005 DE 102005053537
(43) Veröffentlichungstag der Anmeldung: 09.05.2007
(73) Patentinhaber: Hauni Maschinenbau Aktiengesellschaft, 21033 Hamburg (DE)
(72) Erfinder: Hapke, Siegfried, 21502 Geesthacht (DE); Westphal, Uwe, 21423 Drage/Schwinde (DE)
(74) Vertreter: Eisenführ Speiser

(56) Entgegenhaltungen:
- CN-A- 102 697 176
- DE-A1- 3 418 079
- DE-A1- 19 713 973
- GB-A- 2 060 348

## Beschreibung

Die Erfindung betrifft eine Vorrichtung zur optischen Überwachung eines Materialstrangs der tabakverarbeitenden Industrie, insbesondere eines Zigarettenstrangs.

Optische Prüfmittel der eingangs bezeichneten Gattung dienen zum Erfassen von Fehlern und Unregelmäßigkeiten an einem Materialstrang. Fehler in der Umhüllung eines bewegten Materialstrangs der tabakverarbeitenden Industrie, beispielsweise in der Papierumhüllung eines Zigarettenstrangs oder eines Filterstrangs, wie Löcher, Flecken, fehlende oder falsch platzierte Aufdrucke, lichtreflektierende Klebstellen usw., bewirken eine Änderung der Reflexion von auf die Hülle fallendem Licht. Löcher in der Umhüllung eines Zigarettenstrangs wirken beispielsweise wie dunkle Flecken und setzen den Reflexionsgrad herab. Aufdrucke verändern den Reflexionsgrad der Umhüllung je nach ihrem Farbton. Leimflecken außerhalb der Leimnaht erhöhen die Reflexion des Lichts an der Umhüllung des Zigarettenstrangs. So kann aus der Intensität des am bewegten Strang reflektierten Lichts auf den Zustand des Strangs geschlossen werden. Durch die EP 1 518 469 A1 der Anmelderin ist eine Vorrichtung der eingangs genannten Art bekannt geworden. Diese Vorrichtung weist eine ringförmige Anordnung von parallel zur Strangrichtung strahlenden Lichtquellen auf, deren Licht durch eine erste Optik in der Form einer kegelförmigen Spiegelfläche nahezu senkrecht auf den Materialstrang umgeleitet wird, wobei das von dem Materialstrang reflektierte Licht von einer zweiten Optik in der Form einer zweiten kegelförmigen Spiegelfläche mit zu der ersten Spiegelfläche entgegengesetzter Neigung in eine parallel zum Strang verlaufende Richtung umgeleitet und von einer ringförmigen Anordnung von Detektoren erfasst wird.

DE 34 18 079 A1 offenbart eine Vorrichtung gemäß des Oberbegriffs des Anspruchs 1. Die Vorrichtung weist eine Optik mit Linsen und Planspiegel auf. Die Lichtintensität der Lichtquelle wird mit dieser Optik auf einen Umfangsabschnitt eines Materialstrangs konzentriert.

Aufgabe der vorliegenden Erfindung ist es, Vorrichtungen der eingangs genannten Art zu verbessern.

Diese Aufgabe wird erfindungsgemäß durch eine Vorrichtung gemäß Anspruch 1 gelöst.

Die Erfindung umfasst die Erkenntnis, dass die aus dem Stand der Technik bekannten Vorrichtungen in bestimmten Fällen auch dann Fehler der eingangs genannten Art auf der Oberfläche des inspizierten Materialstrangs anzeigen, wenn derartige Fehler nicht vorhanden sind. Denn die bekannten Vorrichtungen reagieren auf die Intensität des am bewegten Strang reflektierten Lichts. Die Erfinder der Erfindung hauben jedoch erkannt, dass derartige Änderungen der Intensität auch durch Schwankungen im Durchmesser des Materialstrangs und / oder durch Veränderungen der Position des Materialstrangs verursacht werden können. Denn die vorgenannten Änderungen bewirken eine Änderung der Menge des reflektierten Lichts, ohne das einer der eingangs genannten Fehler auf der Oberfläche des Materialstrangs vorhanden sein muss. Beispielsweise bewirkt eine Verringerung des Durchmessers des Materialstrangs eine Verringerung der auf dem Detektor abgebildeten Umfangsoberfläche des Materialstrangs. Dieser Effekt wird nur zum Teil dadurch kompensiert, dass durch die Verringerung des Umfangs des Materialstrangs und damit auch seiner Umfangsoberfläche die Beleuchtungsintensität zunimmt. Insgesamt gelangt weniger Licht auf den Detektor, wodurch der Vorrichtung suggeriert wird, dass an dieser Stelle ein Bereich verringerter Reflektion auf der Oberfläche des Materialstranges vorhanden ist.

Zur Lösung derartiger Probleme wäre es beispielsweise möglich, die Toleranzbereiche der Messung so weit zu erhöhen, dass derartige Durchmesserschwankungen des Materialstrangs keine Auswirkung auf das Messergebnis mehr haben. Das würde jedoch die Genauigkeit der Messung entsprechend reduzieren. Eine solche Lösung ist daher nachteilig.

Die Erfindung gemäß Anspruch 1 löst die geschilderten Probleme dadurch, dass sie einen im Bereich der Oberfläche des zu inspizierenden Materialstrangs konvergenten Lichtstrahl zur Verfügung stellt. Auf diese Weise wird auch bei variierendem Strangdurchmesser und sich entsprechend veränderndem Umfang des Stranges immer die gleiche Lichtmenge auf den Bereich der Strangoberfläche geleitet, der auf dem Detektor abgebildet wird. Verringert sich beispielsweise der Strangumfang, so werden die beleuchtete Fläche und die auf dem Detektor abgebildete Fläche im gleichen Maße kleiner, so dass bei unveränderten Reflektionseigenschaften der Strangoberfläche die gleiche Lichtmenge auf den Detektor fällt. Vergrößert sich der Strangdurchmesser, so vergrößern sich die beleuchtete Fläche und die abgebildete Fläche in gleichem Maße, so dass die auf den Detektor gelangende Lichtmenge ebenfalls konstant bleibt.

Es ist daher dank der Erfindung möglich, die Oberfläche von Materialsträngen der tabakverarbeitenden Industrie zu inspizieren, ohne dass eine derartige Inspektion durch Durchmesserschwankungen oder Positionsänderungen des im Strahlkegel liegenden Materialstrangs beeinflusst wird.

Wenn im hier in Rede stehenden Zusammenhang die Begriffe "Lichtstrahl" oder "optischer Strahl" verwendet werden, so bedeutet dies tatsächlich, dass ein Bündel von Lichtstahlen, auch Strahlenbündel genannt, vorliegt.

Bevorzugte Ausführungsformen der Erfindung sind in den Unteransprüchen angegeben.

Die erste Optik weist erfindungsgemäß eine gekrümmte reflektierende Fläche zum Umleiten der optischen Strahlen auf, wobei der Krümmungsradius der gekrümmten Fläche bevorzugt derart bemessen ist, dass sich eine Größe einer von den umgeleiteten optischen Strahlen auf der Oberfläche des Materialstrangs ausgeleuchteten Fläche sowie eine Größe einer auf dem Detektor abgebildeten Oberfläche des Materialstrangs bei einer Änderung der räumlichen Position der Oberfläche im wesentlichen im gleichen Maße ändern. Da hier alle Strahlengänge und das Licht beeinflussende Elemente abbildende Strahlengänge bzw. Elemente sind, d.h. Strahlengänge bzw. Elemente der geometrischen oder auch Strahlen-Optik sind, sind deren Abbildungsregeln dem Fachmann bekannt. Der Fachmann ist daher mit dieser Anweisung in der Lage, den Krümmungsradius in der zuvor geforderten Weise nach den Abbildungsregeln der geometrischen Optik auszubilden. Dabei kann der Krümmungsmittelpunkt der gekrümmten Fläche außerhalb der Mitte des Materialstrangs liegen.

Erfindungsgemäß ist die vorgenannte gekrümmte Fläche eine zumindest teilweise geschlossen ringförmig um den Materialstrang herum angeordnete, auf die Mitte des Materialsstrangs zentrierte, Fläche zum Umleiten der optischen Strahlen der Lichtquellen. Auf diese Weise lässt sich der gesamte Umfang des Materialstrangs beleuchten und untersuchen.

Mit Bezug auf die begleitenden Zeichnungen wird nun eine Ausführungsform der Erfindung beschrieben. Die Zeichnungen zeigen:
- Figur 1: eine perspektivische Ansicht einer Zigarettenstrangmaschine; und
- Figur 2: einen teilweisen Querschnitt durch eine schematische Darstellung einer bevorzugten Ausführungsform einer erfindungsgemäßen Vorrichtung zur optischen Überwachung eines Materialsstrangs der tabakverarbeitenden Industrie.

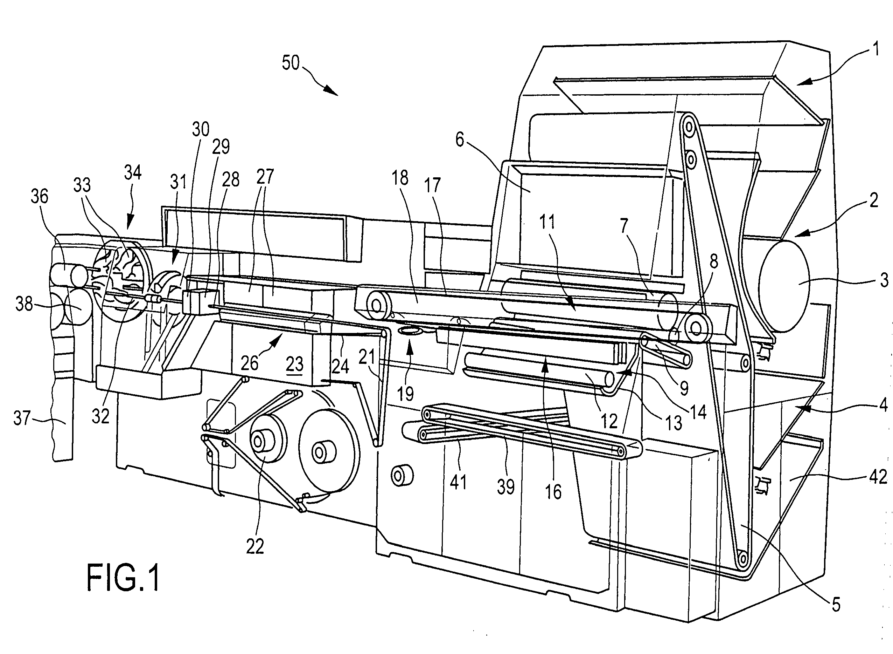

Figur 1 zeigt eine perspektivische Ansicht einer Zigarettenstrangmaschine 50 der Anmelderin vom Typ Protos. Die Zigarettenstrangmaschine 50 funktioniert wie folgt: Von einer Schleuse 1 wird ein Vorverteiler 2 portionsweise mit Tabak beschickt. Eine Entnahmewalze 3 des Vorverteilers 2 ergänzt gesteuert einen Vorratsbehälter 4 mit Tabak, aus dem ein Steilförderer 5 Tabak entnimmt und einen Stauschacht 6 gesteuert beschickt. Aus dem Stauschacht 6 entnimmt eine Stiftwalze 7 einen gleichförmigen Tabakstrom, der von einer Ausschlagwalze 8 aus den Stiften der Stiftwalze 7 herausgeschlagen und auf ein mit konstanter Geschwindigkeit umlaufendes Streutuch 9 geschleudert wird. Ein auf dem Streutuch 9 gebildetes Tabakvlies wird in eine Sichteinrichtung 11 geschleudert, die im wesentlichen aus einem Luftvorhang besteht, den größere bzw. schwerere Tabakteile passieren, während alle anderen Tabakteilchen von der Luft in einen von einer Stiftwalze 12 und einer Wand 13 gebildeten Trichter 14 gelenkt werden. Von der Stiftwalze 12 wird der Tabak in einen Tabakkanal 16 gegen einen Strangförderer 17 geschleudert, an dem der Tabak mittels in eine Unterdruckkammer 18 gesaugter Luft gehalten und ein Tabakstrang aufgeschauert wird. Ein Egalisator 19 entfernt überschüssigen Tabak von dem Tabakstrang, der dann auf einen im Gleichlauf geführten Zigarettenpapierstreifen 21 gelegt wird. Der Zigarettenpapierstreifen 21 wird von einer Bobine 22 abgezogen, durch ein Druckwerk 23 geführt und auf ein angetriebenes Formatband 24 gelegt. Das Formatband 24 transportiert den Tabakstrang und den Zigarettenpapierstreifen 21 durch ein Format 26, in dem der Zigarettenpapierstreifen 21 um den Tabakstrang gefaltet wird, so dass noch eine Kante absteht, die von einem nicht dargestellten Leimapparat in bekannter Weise beleimt wird. Darauf wird die Klebnaht geschlossen und von einer Tandemnahtplätte 27 getrocknet.

Ein so gebildeter Zigarettenstrang 28 durchläuft ein Strangdichtemessgerät 29, das den Egalisator 19 steuert, und eine bevorzugte Ausführungsform 30 einer erfindungsgemäßen Vorrichtung 30 zur optischen Überwachung des Zigarettenstrangs 28, welcher anschließend von einem Messerapparat 31 in doppeltlange Zigaretten 32 geschnitten wird. Die doppeltlangen Zigaretten 32 werden von einer gesteuerte Arme 33 aufweisenden Übergabevorrichtung 34 einer Übernahmetrommel 36 einer Filteransetzmaschine 37 übergeben, auf deren Schneidtrommel 38 sie mit einem Kreismesser in Einzelzigaretten geteilt werden.

Förderbänder 39, 41 fördern überschüssigen Tabak in einen unter dem Vorratsbehälter 4 angeordneten Behälter 42, aus dem der rückgeführte Tabak von dem Steilförderer 5 wieder entnommen wird.

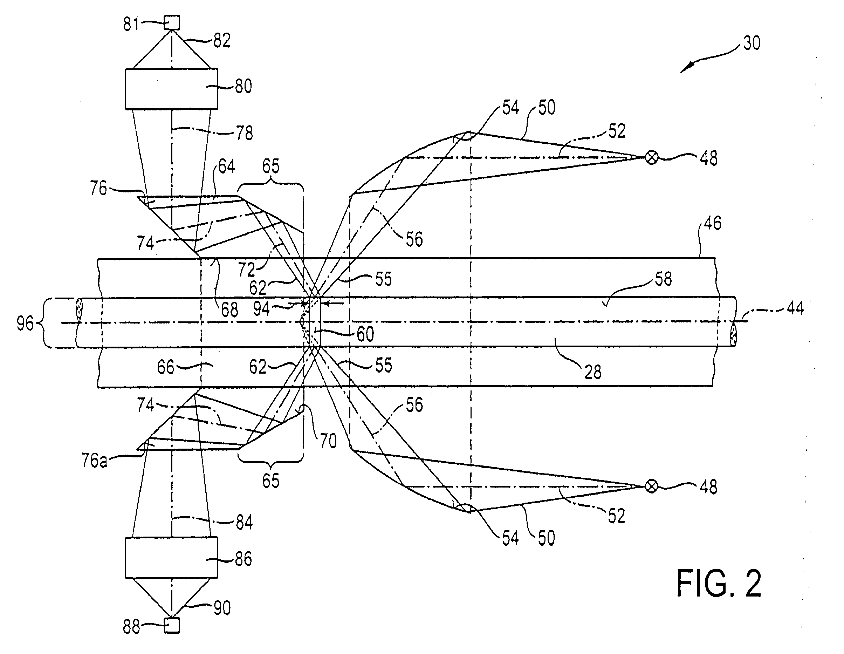

Figur 2 zeigt einen teilweisen Querschnitt durch eine schematische Darstellung der Vorrichtung 30, gemäß eines bevorzugten Ausführungsbeispiels der Erfindung, zur optischen Überwachung des Zigarettenstrangs 28. Die Darstellung der Figur 2 dient nur der Verdeutlichung. Die absoluten und relativen Abmessungen in der Figur 2 entsprechen daher nicht den tatsächlichen Abmessungen. Alle in der Figur 2 dargestellten Strahlengänge und das Licht beeinflussende Elemente sind abbildende Strahlengänge bzw. Elemente, d.h. Strahlengänge bzw. Elemente der geometrischen oder auch Strahlen-Optik, deren Abbildungsregeln dem Fachmann bekannt sind.

Figur 2 stellt den Zigarettenstrang 28 in einem horizontalen Verlauf dar. Der Zigarettenstrang 28 weist eine Strangmitte 44 auf, deren Verlauf mit der Mitte 44 eines Glasröhrchens 46 übereinstimmt, in dem sich der Strang 28 bewegt. Das Glasröhrchen 46 hat keine optische Funktion, sondern dient nur der Führung des Stranges 28.

Die Vorrichtung 30 weist mehrere, ringförmig um den Strang 28 herum angeordnete Lichtquellen 48 auf. Die Lichtquellen 48 geben jeweils divergierende optische Strahlen 50 ab, deren Mittelpunktsstrahle 52 im wesentlichen parallel zur Strangmitte 44 verlaufen. Aus zeichnerischen Gründen sind nur zwei Lichtquellen 48 dargestellt.

Die Vorrichtung 30 weist weiterhin eine als erste Optik dienende, ringförmig um den Strang 28 herum angeordnete reflektierende, gekrümmte, im Verlauf 52 der optischen Strahlen 50 liegende Oberfläche 54 auf. Die ringförmige Struktur der Oberfläche 54 ist in der Figur 2 durch senkrecht zur Strangmitte 44 verlaufende gestrichelte Linien angedeutet, deren Verlauf aus zeichnerischen Gründen für die konvergenten Strahlen 55 teilweise unterbrochen ist

Die Oberfläche 54 ist derart gekrümmt, positioniert und relativ und zu den Lichtquellen 48 ausgerichtet, dass sie die divergierenden optischen Strahlen 50 aus der im Wesentlichen parallel zum Strang 28 verlaufenden Richtung 52 des Mittelpunktsstrahls in eine in einem steilen Winkel zum Strang verlaufende Richtung 56 des Mittelpunktsstrahls umleitet und auf die Strangmitte 44 fokussiert. Der Krümmungsradius der Fläche 54 ist mit anderen Worten derart, dass nach dem Umleiten durch die Fläche 54 die umgeleiteten optischen Strahlen 55 bis zum Erreichen der Strangmitte 44 konvergent sind.

Die Vorrichtung 30 umfasst weiterhin ein als eine zweite Optik zum Umleiten der von der beleuchteten Fläche 60 reflektierten Strahlen 62 ausgebildetes optisches Polygonprisma 64. Das Polygonprisma 64 weist eine im wesentlichen zylindrische Form auf und weist entlang seiner mit der Strangmitte 44 zusammenfallenden Hauptachse 44 einen zentralen Durchbruch 66 auf, um das Glasröhrchen 46 aufzunehmen. Das Polygonprisma 64 liegt somit mit seiner Innenoberfläche 68 ringförmig um das Glasröhrchen 46 herum. Auch hier ist die ringförmige Struktur des Prismas 64 durch senkrecht zur Strangmitte 44 verlaufende gestrichelte Linien angedeutet, deren Verlauf aus zeichnerischen Gründen für die reflektierten Strahlen 62 teilweise unterbrochen ist.

Das Polygonprisma 64 weist ein in der Figur 2 rechts dargestelltes kegelstumpfartiges Ende 65 auf. Das kegelstumpfartige Ende 65 erzeugt in dem Polygon-prisma 64 eine konische, kreisförmig um die Strangmitte 44 herum angeordnete und auf diese zentrierte, reflektierende Innenoberfläche 70 zum Umleiten der reflektierten Strahlen 62 aus einer steil zur Oberfläche 58 des Strangs 28 verlaufenden Ausrichtung 72 des Mittelpunktsstrahls in eine im wesentlichen parallel zur Strangmitte 44 verlaufende Ausrichtung 74 des Mittelpunktsstrahls.

Das Polygonprisma 64 weist eine geneigte flache Innenoberfläche 76 auf der in Figur 2 oberhalb des Glasröhrchens 46 dargestellten Seite und eine hierzu spiegelsymmetrisch zur Strangmitte 44 angeordnete reflektierende, flache geneigte Innenoberfläche 76a auf.

Die Innenoberfläche 76 ist so ausgerichtet, dass sie den in der Figur 2 oberhalb der Strangmitte 44 liegenden Teil der optischen Strahlen des Mittelpunktsstrahls 74 in eine im wesentlichen wieder senkrecht zur Strangmitte 44 verlaufende Richtung 78 des Mittelpunktsstrahls auf eine Abbildungsoptik 80 reflektiert, die schließlich auf einen Detektor 81 fokussierte optische Strahlen 82 erzeugt. In entsprechender Weise leitet die Innenoberfläche 76a den in der Figur 2 unterhalb der Strangmitte 44 liegenden Teil der optischen Strahlen des Mittelpunktsstrahls 74 in eine mittlere Strahlrichtung 84 auf eine zweite Abbildungsoptik 86, die auf einen Detektor 88 fokussierte optische Strahlen 90 erzeugt. Die Abbildungsoptiken 80 und 86 weisen beide jeweils nicht dargestellte Fokussierlinsen und Blenden zum Fokussieren der optischen Strahlen mit den Mittelpunktsstrahlen 78 bzw. 84 auf.

Die Funktion der Vorrichtung 30 ist wie folgt:

Aufgrund der Konvergenz der von der gekrümmten Fläche 54 reflektierten, entlang der optischen Achse 56 verlaufenden Strahlen 55 wird von diesen auf der Oberfläche 58 des Zigarettenstrangs 28 eine in der Figur 2 schematisch angedeutete Umfangsoberfläche 60 des Zigarettenstrangs 28 ausgeleuchtet. Durch die nach dem Hindurchtreten durch das Glasröhrchen 46 weiter bestehende Konvergenz der Strahlen 55 verringert sich die Breite 94 der beleuchteten Fläche 60, wenn sich der Durchmesser 96 des Strangs 28 verringert. Auf diese Weise wird die Verringerung der auf dem Detektor 81 abgebildeten Fläche durch die Erhöhung der Beleuchtungsintensität weitgehend kompensiert.

In entsprechender Art und Weise vergrößert sich die Breite 94 der beleuchteten Fläche 60 durch die Konvergenz der Strahlen 55, wenn sich der Strangdurchmesser 96 vergrößert.

Ähnliches gilt, wenn sich die Strangmitte 44 relativ zum Glasröhrchen 46 beispielsweise in der Figur 2 nach unten verschiebt. Dann vergrößert sich zwar die Breite 94 in dem in der Figur 2 unterhalb der Strangmitte 44 liegenden Bereich der Oberfläche 58 des Strangs 28. Genauso verkleinert sich jedoch aufgrund der Konvergenz der optischen Strahlen 55 die Breite 94 in dem in der Figur 2 oberhalb der Strangmitte 4 liegenden Bereich der Oberfläche 58.

## Patentansprüche

1. Vorrichtung zur optischen Überwachung eines Materialstrangs (28) der tabakverarbeitenden Industrie, insbesondere eines Zigarettenstrangs (28), mit:
einer ersten Optik (54) zum Umleiten von im wesentlichen parallel zum Materialstrang (28) zur Verfügung gestellten optischen Strahlen (50) in Richtung auf den Materialstrang (28), und
einem Detektor (81, 88) zum Detektieren der von dem Materialstrang (28) reflektierten Strahlen (55),
wobei
die erste Optik (54) derart ausgebildet ist, dass von der Optik (54) umgeleitete optische Strahlen (55) im Bereich der Oberfläche (58) des Materialstrangs (28) Konvergenz aufweisen, **dadurch gekennzeichnet, dass** die
erste Optik (54) eine gekrümmte reflektierende Fläche (54) zum Umleiten der optischen Strahlen (50) aufweist, und
wobei die gekrümmte reflektierende Fläche (54) zum Umleiten der optischen Strahlen (50) zumindest teilweise geschlossen ringförmig um den Materialstrang (28) herum und auf die Mitte (44) des Materialsstrangs (28) zentriert angeordnet ist.

2. Vorrichtung nach Anspruch 1,
wobei der Krümmungsmittelpunkt der gekrümmten Fläche (54) außerhalb der Mitte (44) des Materialstrangs (28) liegt.

3. Vorrichtung nach einem der vorstehenden Ansprüche,
mit mindestens einer Lichtquelle (48), um jeweils einen divergierenden optischen Strahl (50) zur Verfügung zu stellen.

4. Vorrichtung nach Anspruch 3,
mit mindestens drei Lichtquellen (48), wobei die Lichtquellen (48) ringförmig um den Materialstrang (28) herum, bevorzugt auf die Mitte (44) des Materialsstrangs (28) zentriert, angeordnet sind.

5. Vorrichtung nach einem der vorstehenden Ansprüche,
mit einer zweiten Optik (64) zum Umleiten der von dem Materialstrang (28) reflektierten Strahlen (62) auf den Detektor (81, 88).

6. Vorrichtung nach Anspruch 5,
wobei die zweite Optik (64) einen prismatischen reflektierenden Körper (64), insbesondere ein Polygonprisma (64), umfasst.

7. Vorrichtung nach einem der vorstehenden Ansprüche,
wobei zwischen Reflektion und Detektion des optischen Strahls (50, 55) eine, bevorzugt eine Fokussierlinse und / oder eine Blende umfassende, Abbildungsoptik (80, 86) vorgesehen ist.

## Claims

1. Device for the optical monitoring of a material strand (28) in the tobacco-processing industry, in particular a cigarette strand (28), with:
a first optical system (54) for diverting optical beams (50), made available substantially parallel to the material strand (28), in the direction of the material strand (28), and
a detector (81, 88) for detecting the beams (55) reflected by the material strand (28),
wherein
the first optical system (54) is developed in such a way that optical beams (55) diverted by the optical system (54) exhibit convergence in the area of the surface (58) of the material strand (28),
**characterised in that**
the first optical system (54) exhibits a curved reflecting area (54) for diverting the optical beams (50), and
wherein the curved reflecting area (54) is disposed to divert the optical beams (50) at least partially closed in an annular arrangement around the material strand (28) and centred on the middle (44) of the material strand (28).

2. Device according to claim 1,
wherein the midpoint of the curvature of the curved area (54) lies outside the middle (44) of the material strand (28).

3. Device according to one of the preceding claims,
with at least one light source (48) in order to make available in each case a diverging optical beam (50).

4. Device according to claim 3,
with at least three light sources (48), wherein the light sources (48) are disposed in an annular arrangement around the material strand (28), preferably centred on the middle (44) of the material strand (28).

5. Device according to one of the preceding claims,
with a second optical system (64) to divert the beams (62) reflected by the material strand (28) onto the detector (81, 88).

6. Device according to claim 5,
wherein the second optical system (64) comprises a prismatic reflecting body (64), in particular a polygon prism (64).

7. Device according to one of the preceding claims,
wherein an imaging optical system (80, 86), preferably comprising a focussing lens and/or an aperture, is provided between reflection and detection of the optical beam (50, 55).

## Revendications

1. Dispositif pour la surveillance optique d'un boudin de matière (28) de l'industrie de transformation du tabac, en particulier d'un boudin de cigarette (28), comportant :
une première optique (54) pour dévier en direction du boudin de matière (28) des rayons optiques (50) présentés d'une manière essentiellement parallèle au boudin de matière (28), et
un détecteur (81, 88) pour détecter les rayons (55) réfléchis par le boudin de matière (28),
la première optique (54) étant conçue de telle sorte que les rayons optiques (55) déviés par l'optique (54) présentent une convergence dans la zone de la surface (58) du boudin de matière (28),
**caractérisé en ce que** la première optique (54) comprend une surface réfléchissante courbe (54) pour dévier les rayons optiques (50), et
la surface réfléchissante courbe (54) étant, pour dévier les rayons optiques (50), disposée de manière annulaire, au moins partiellement fermée, autour du boudin de matière (28), et centrée sur le milieu (44) du boudin de matière (28).

2. Dispositif selon la revendication 1, dans lequel le centre de courbure de la surface courbe (54) se trouve à l'extérieur du milieu (44) du boudin de matière (28).

3. Dispositif selon l'une des revendications précédentes, comportant au moins une source lumineuse (48), pour que chacune d'entre elles mette à disposition un rayon optique divergent (50).

4. Dispositif selon la revendication 3, comportant au moins trois sources lumineuses (48), les sources lumineuses (48) étant disposées de manière annulaire autour du boudin de matière (28), et étant de préférence centrées sur le milieu (44) du boudin de matière (28).

5. Dispositif selon l'une des revendications précédentes, comportant une deuxième optique (64) pour dévier sur le détecteur (81, 88) les rayons (62) réfléchis par le boudin de matière (28).

6. Dispositif selon la revendication 5, dans lequel la deuxième optique (64) comprend un corps réfléchissant prismatique (64), en particulier un prisme polygonal (64).

7. Dispositif selon l'une des revendications précédentes, dans lequel une optique de reproduction (80, 86), comprenant de préférence une lentille de focalisation et/ou un diaphragme, est prévue entre la réflexion et la détection du rayon optique (50, 55).
